# EUROPÄISCHE PATENTSCHRIFT

(11) **EP 1 373 952 B1**
(45) Veröffentlichungstag und Bekanntmachung des Hinweises auf die Patenterteilung: **14.03.2007**
(21) Anmeldenummer: 02732553.9
(22) Anmeldetag: 03.04.2002
(51) Int. Cl.: G02B 6/35

(54) **OPTISCHER UMSCHALTER**
OPTICAL COMMUTATOR
COMMUTATEUR OPTIQUE

(30) Priorität: 03.04.2001 DE 10116513
(43) Veröffentlichungstag der Anmeldung: 02.01.2004
(73) Patentinhaber: Pyramid Optics GmbH, 07745 Jena (DE)
(72) Erfinder: HARZENDORF, Torsten, 07749 Jena (DE); WIPPERMANN, FRANK, 07743 JENA (DE)
(74) Vertreter: Kruspig, Volkmar
(86) Internationale Anmeldenummer: PCT/EP2002/003693
(87) Internationale Veröffentlichungsnummer: WO 2002/082141

(56) Entgegenhaltungen:
- EP-A- 0 955 559
- US-A- 4 303 303
- US-A- 5 594 820
- US-A- 6 088 166
- N. KASHIMA, PASSIVE OPTICAL COMPONENTS FOR OPTICAL FIBER TRANSMISSION, 1995-02-00, S. 307-324 XP000828052
- PATENT ABSTRACTS OF JAPAN Bd. 016, Nr. 427 (P-1416), 8. September 1992 (1992-09-08) & JP 04 145409 A (NEC), 19. Mai 1992 (1992-05-19)

## Beschreibung

Die Erfindung betrifft einen optischen Umschalter, wie dieser beispielsweise aus: Köster, W.; Optische Schalter, Elektronik 1980, Heft 15, Seite 53 bis 57, vorbekannt ist.
Eine dortige Ausführungsform zeigt einen mechanischen Schalter als Umschalter, der das Licht über ein Linsensystem koppelt und durch Parallelverschiebung schaltet. Die Bewegung des die Parallelverschiebung verursachenden Körpers erfolgt in Richtung benachbarter Linsen. Besonders beim Schalten mehrerer Lichtstrahlen ist für diese Bewegung ein Meßsystem für den zurückgelegten Weg des Körpers notwendig.

Gemäß WO 98/43125 ist ein optischer Mehrfachschalter bekannt, bei welchem über maximal zwei Ausnehmungen ein Umschalten dadurch erreicht wird, daß diese Ausnehmungen wahlweise mit einem optisch dünneren oder dichteren Medium gefüllt sind. Dabei wirken zwei Flächen der Ausnehmungen entweder als Reflexionsflächen oder als transmittierende Flächen. Durch den Wechsel der optischen Eigenschaften innerhalb eines transparenten Grundkörpers mit dieser Ausnehmung ergibt sich ein komplizierter und kostenintensiver Aufbau.

Die DE-OS 199 10 375 A1 offenbart einen optischen Schalter und ein modulares Schaltsystem umfassend optische Schaltelemente. Dort ist ein optisches Bauelement mit Kanälen beschrieben, in denen sich Flüssigkeiten mit geeignetem Brechungsindex befinden. Durch eine Verschiebung der Flüssigkeiten innerhalb der Kanäle mittels geeigneter Aktoren wird wahlweise das Licht durch die Flüssigkeit geleitet. Mit der Auswahl eines geeigneten Brechungsindex lassen sich Lichtstrahlen in beliebigen Winkeln ablenken, so daß ein Schalten möglich ist.
Der Nachteil dieser Lösung besteht in der definierten Bewegung der Flüssigkeiten mittels der Aktoren. Ein weiterer Nachteil ist die Verbindung einer bewegbaren Flüssigkeit mit einem mechanisch wirkenden Aktor.
Zum Stand der Technik sei weiterhin auf die US-PS 5,361,315, US-PS-6 088 166, US-PS 4,303,303, US-PS-5,594,820, JP 04 1 45 409 A und die EP 0 955 559 A1 verwiesen.

Der Erfindung liegt unter Berücksichtigung des Standes der Technik die Aufgabe zugrunde, einen weiterentwickelten, kostengünstigen faseroptischen Umschalter anzugeben, der in der Lage ist, in zuverlässiger Weise Lichtstrahlung zwischen wenigstens einem Eingang und mindestens zwei Ausgängen einer integrierbaren Optik umzuschalten.

Die Lösung der Aufgabe der Erfindung erfolgt mit einem Gegenstand nach den Merkmalen des Patentanspruchs 1, wobei die Unteransprüche zweckmäßige Ausgestaltungen und Weiterbildungen umfassen.

Der erfindungsgemäße optische Umschalter zeichnet sich insbesondere durch einen einfachen Aufbau aus, wobei keine drehbaren Bestandteile, wie z.B. ein Dreh- oder Schwenkspiegel, notwendig werden.

Der optische Umschalter besteht aus einem Grundkörper oder einer kufenartigen Tragplatte, der bzw. die mit einem Faserarray, einem Linsenarray, einem Ablenkmodul und einem Reflektormodul versehen ist.

Über das Ablenkmodul im Strahlengang wird ein paralleler Versatz der Lichtstrahlung erreicht. Dieser parallele Versatz entspricht dem Abstand benachbarter Linsen des Linsenarrays. Der Versatz wird über eine zweifache Brechung in einem Körper gewährleistet, der in den Strahlengang hinein, aber auch heraus bewegbar ist. Der besondere Vorteil des optischen Umschalters besteht dabei darin, daß der Körper in Richtung des Grundkörpers bzw. der Platte und von diesem bzw. dieser weg bewegt wird. Dabei vollzieht sich die Bewegung nur zwischen den zwei Endpunkten der Bewegungseinrichtung. Ein Endpunkt ist der Grundkörper selbst, der als Anschlag wirkt. Eine separate Positionserfassung ist dabei nicht notwendig. Aufgrund der vorstehenden Maßnahmen ist ein einfacher Aufbau des optischen Umschalters gegeben.

Über das Reflektormodul werden die Lichtstrahlen wenigstens zweimal in einer Ebene und parallel zum Grundkörper reflektiert. Damit wird der Strahlengang vorteilhafterweise so beeinflußt, daß sich der mindestens eine Eingang und die wenigstens zwei Ausgänge in einer Ebene befinden. Hierdurch ist je optischem Umschalter nur ein Faserarray und ein Linsenarray mit wenigstens einer Zeile notwendig, wobei das Faserarray gleichzeitig die Ein- und Ausgabebaugruppe darstellt. Auf diesem Wege sind die optischen Umschalter erfindungsgemäß leicht und ökonomisch, d.h. kostengünstig zu realisieren.

Ein weiterer Vorteil ist durch das die Endenbereiche der Lichtwellenleiter als Fasern aufnehmende Faserarray gegeben. Die Endenbereiche der Fasern werden dabei fest positioniert, so daß ein bestimmter Abstand zwischen Faserende und Linse bei der Realisierung der optischen Umschalter einstellbar ist. Der Abstand ist je nach Wellenlänge der Lichtstrahlung wählbar.

Das Faserarray kann Bestandteil des Grundkörpers sein, so daß sich die Aufwendungen bei der Herstellung des optischen Umschalters weiter reduzieren. Der Grundkörper ist dabei so strukturiert, daß die Endenbereiche der Wellenleiter als Fasern plazierbar sind. Hierzu dienen in einer Weiterbildung der Erfindung Nuten, die vorzugsweise eine V-Form aufweisen. Zur vollständigen Fixierung der Endenbereiche der Fasern werden diese mit einer Deckplatte abgedeckt. Selbige kann ebenfalls zu den ersten Nuten korrespondierende zweite Nuten aufweisen, so daß die Endenbereiche der Fasern exakt justierbar sind. Auch die zweiten Nuten sind vorteilhafterweise V-förmig ausbildbar. Eine solche V-Form kann einfach durch Ätzverfahren, wie aus der Haltleitertechnik bekannt, realisiert werden.

Der Körper ist mit einer elektrisch ansteuerbaren ersten Bewegungseinrichtung so verbunden oder gleichzeitig ein Bestandteil dieser ersten Bewegungseinrichtung, wobei planparallele Oberflächen des Körpers rechtwinklig oder annähernd rechtwinklig zu der Grundfläche des Grundkörpers mit dem Faserarray, dem Linsenarray und dem Reflektormodul bewegbar sind.
Diese Realisierung gewährleistet eine Bewegung des Körpers gegenüber der Grundfläche des Grundkörpers von und nach oben. Der Grundkörper kann dabei zweckmäßigerweise als Anschlag bei der Positionierung des Körpers im Strahlengang dienen. Dabei werden die Lichtstrahlen planparallel abgelenkt. Bei einer Ausgangsstellung als einer Endstellung der ersten Bewegungseinrichtung werden die Lichtstrahlen durch den Körper nicht planparallel abgelenkt. Dies kann z.B. entweder durch die Nichtansteuerung der erstgen Bewegungseinrichtung realisiert werden oder eine Deckplatte des optischen Umschalters dient zweckmäßigerweise als weiterer Anschlag.

Die Verbindung des Reflektormoduls mit einer elektrisch ansteuerbaren zweiten Bewegungseinrichtung stellt die Möglichkeit eines weiteren zusätzlichen Umschaltvorgangs dar. Dabei können auch Anschläge vorgesehen sein, so daß eine Positionierung einfach und schnell zwischen den dadurch gebildeten Bewegungsendpunkten vorgebbar ist. Der halbe Abstand benachbarter Linsen oder ein Mehrfaches hiervon ist die Länge der Bewegungsstrecke.

Zweckmäßige Ausführungsförmen der ersten und/oder der zweiten Bewegungseinrichtung sind piezoelektrische Biegeplatten, piezoelektrische Linearantriebe, elektromechanische Linearantreibe, elektromagnetische Linearschrittantriebe oder magnetostriktive Linearantriebe. Diese werden so ausgelegt, daß eine Integration in elektrische / elektronische Systeme leicht möglich wird.

Als piezoelektrische Biegeplatte kommt vorteilhafterweise ein Parallelbiegeelement, bestehend aus mindestens zwei Mehrmorphpiezoelementen zum Einsatz. Dabei wird gewährleistet, daß der Körper weitestgehend rechtwinklig zur Grundplatte bewegbar ist.

Der Körper besteht aus einer Ablenkplatte, zwei planparallelen und achromatisierten Ablenkplatten oder weist als Quader parallele Oberflächen auf. Der Winkel zwischen den Oberflächen und der Richtung der Lichtstrahlen richtet sich nach der Wellenlänge der Lichtstrahlung und den Materialien der Ablenkplatte oder des Quaders. Der Winkel ist dabei so zu wählen und einzustellen, daß die einfallenden Lichtstrahlen parallel versetzt zur ursprünglichen Richtung abgelenkt werden. Dieser Versatz ist gleich dem Abstand zweier benachbarter Linsen, so daß das gewünschte Umschalten gewährleistet ist.

Eine Positionierung des Quaders als Körper, so daß eine Kante des Quaders in Richtung des Linsenarrays weist und sich zwischen zwei benachbarten Linsen des Linsenarrays befindet, führt dazu, daß eine n- auf n-Umschaltung über den optischen Schalter gegeben ist.

Eine weitere vorteilhafte Realisierungsform für eine zweimalige rechtwinklige Richtungsänderung besteht aus einem Reflektormodul mit zwei rechtwinklig zueinander angeordneten Reflexionsflächen. Dadurch wird gewährleistet, daß das Linsenarray mit wenigstens einer Zeile und die in einem Abstand angeordneten Endenbereiche der Lichtwellenleiter als Fasern im Faserarray sowohl die Eingabe- als auch die Ausgangsbaugruppe bilden.

Nach einer Weiterbildung der Erfindung wird der Abstand zwischen dem Ende des Lichtwellenleiters und einer Linse des Linsenarrays vorteilhafterweise so gewählt, daß sich günstige Einkoppelbedingungen für einen großen spektralen Wellenlängenbereich von einschließlich 550 nm bis hin zu 1900 nm ergeben.

Ein plattenförmiger Körper bestehend z.B. aus Silizium als Grundmaterial läßt sich durch die Anwendung bekannter Halbleitertechnologien vielseitig und einfach bearbeiten. Besonders durch die Verwendung von Ätzverfahren lassen sich die Nuten für die Aufnahme der Endenbereiche der Wellenleiter als Faserarray leicht herstellen. Weiterhin können Bauelemente in diesen plattenförmigen Körper integriert werden. Silizium zeichnet sich weiterhin dadurch aus, daß an sich bekannte Verbindungstechnologien in Form von Klebe- oder Lötverfahren zur Realisierung optischer Umschalter angewendet werden können.

In einer Ausführungsform ist ein optischer Umschalter gegeben, wobei mehrere benachbarte Lichtstrahlen synchron umgeschaltet werden. Benachbart bedeutet dabei sowohl nebeneinander bei einer zeilenförmigen Anordnung der Enden von Lichtwellenleitern und/oder übereinander in mehreren Zeilen übereinander angeordneter Enden von Lichtwellenleitern. Damit lassen sich Umschalter der Form m(1 auf n) oder m(2 auf 2) mit m=1,2,3... realisieren.

Mit der Stapelanordnung mehrerer optischer Umschalter sind leicht unterschiedliche Realisierungen in Form von 1 auf n oder n auf n realisierbar.

Die Erfindung soll nachstehend anhand eines Ausführungsbeispiels sowie unter Zuhilfenahme von Figuren näher erläutert werden.

Hierbei zeigen:
- Fig. 1: eine prinzipielle Darstellung eines optischen Umschalters in Draufsicht,
- Fig. 2: eine prinzipielle Darstellung eines optischen Umschalters in Draufsicht mit einem parallelen Versatz der Lichtstrahlen,
- Fig. 3: eine erste Bewegungseinrichtung im nichtangesteuerten (a) und im angesteuerten (b) Zustand mit einem Ablenkkörper,
- Fig. 4: eine prinzipielle Darstellung eines optischen Umschalters mit einer Möglichkeit des Vertauschens der Ein- und Ausgänge und
- Fig. 5: eine schematische Darstellung einer symmetrischen Linsenkopplung mit Strahlengang bei einem gaußschen Strahlenbündel.

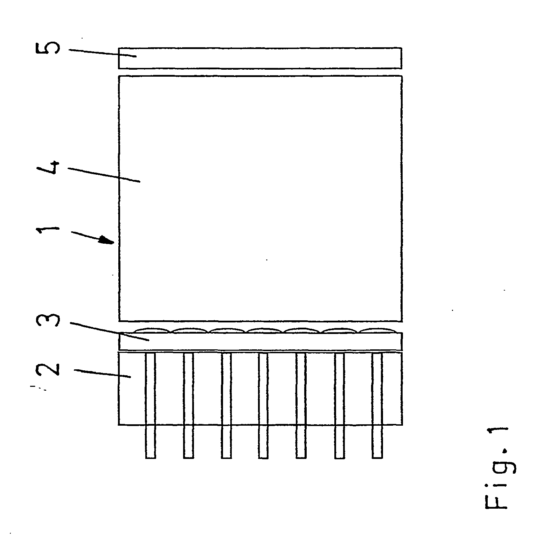

Der optische Umschalter gemäß Ausführungsbeispiel besteht im wesentlichen aus einem Grundkörper 1 oder einer kufenartigen, senkrecht zur Optik stehenden Platte, der bzw. die mit einem Faserarray 2 als Ein- und/oder Ausgabebaugruppe, einem Linsenarray 3 in wenigstens einer Zeile, einem Ablenkmodul 4 und einem Reflektormodul 5 versehen ist. Fig. 1 zeigt den optischen Umschalter in einer Realisierungsform in Draufsicht.

Der Grundkörper 1 kann plattenförmig ausgebildet sein und besteht vorteilhafterweise aus Silizium, Glas, Keramik oder Glaskeramik. Das Faserarray 2 ist ebenfalls eine Platte, wobei mehrere mit einem Abstand und parallel zueinander angeordnete Nuten eingebracht sind. Die Nuten können beispielsweise mittels Ätzen ausgebildet werden. Entstehende V-förmige Querschnitte dienen in vorteilhafter Weise der Aufnahme der Endenbereiche von Lichtwellenleitern. Für eine Erhöhung der Stabilität der Fasern sind die Endenbereiche mit einer Platte abgedeckt, die entweder plan ausgeführt ist, oder ebenfalls V-förmige Nuten, korrespondierend zu denen im Grundkörper, aufweist. Die Endenbereiche der Fasern sind in diesen Nuten vorteilhafterweise eingeklebt, d.h. stoffschlüssig befestigt.

Mit einem Abstand zu dem Faserarray 2 als Ein- und/oder Ausgangsbaugruppe ist in Strahlrichtung ein Linsenarray mit wenigstens einer Zeile angeordnet. Der Abstand der Linsen zueinander ist gleich dem Faserabstand. Die Anzahl der Fasern und die der Linsen ist gleich. Im Strahlengang nach dem Linsenarray 3 befindet sich der Ablenkmodul 4. Weiterhin ist wenigstens eine erste Bewegungseinrichtung 6 mit einem Körper 7 so vorgesehen, daß dieser Körper 7 in mindestens einen Strahlengang verfahrbar ist. Diese erste Bewegungseinrichtung 6 wirkt dabei rechtwinklig oder überwiegend rechtwinklig zum Grundkörper 1. Der Grundkörper 1 selbst ist dabei ein Anschlag für den Körper 7.
Der Körper 7 besteht aus einer Ablenkplatte, zwei planparallelen und achromatisierten Ablenkplatten oder ist ein Quader aus einem Glas. Die einzelnen Ablenker können eine Beschichtung aufweisen, um Polarisationseffekte zu vermeiden.

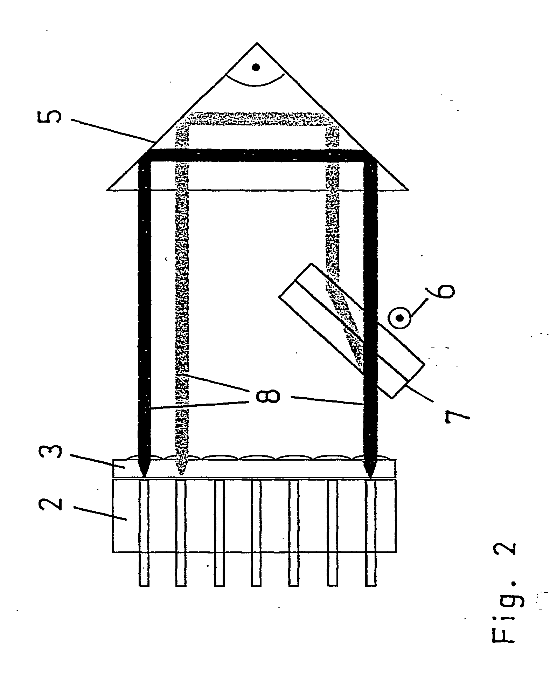

Die Breite des Körpers 7 ist länger als der Abstand benachbarter Linsen. Die Höhe wiederum ist größer als der Durchmesser der Lichtstrahlen 8. Durch diese Anordnung erfolgt bei der Positionierung des Körpers 7 eine Parallelverschiebung des jeweiligen Lichtstrahls 8. Durch den schrägstehenden Körper, der die Lichtstrahlen 8 nach zweimaliger Brechung um einen Betrag parallel verschiebt, entsteht ein gewünschter Versatz. Der Betrag ist gleich dem Abstand benachbarter Linsen, wie in Fig. 2 gezeigt.

In einer Ausführungsform kann der Körper 7 auch so breit ausgeführt sein, daß mehrere benachbarte Lichtstrahlen 8 synchron versetzt werden, so daß sich wenigstens ein 2(1x2)-Umschalter ergibt.

Die verschobenen oder nicht verschobenen Lichtstrahlen 8 gelangen danach auf den Reflektormodul 5.
Dieser besteht aus zwei rechtwinklig zueinander angeordneten Reflexionsflächen, die so ausgeführt sind, daß der Öffnungswinkel in Richtung des Linsenarrays 3 weist. Dadurch werden die Lichtstrahlen 8 zweimal rechtwinklig reflektiert, so daß diese wieder auf das Linsenarray 3 treffen und auf die Enden der Lichtwellenleiter gelangen. Dies sind dann die Ausgänge des optischen Umschalters wie in der Fig. 2 dargestellt.

Die erste Bewegungseinrichtung 6, die mit dem Körper 7 gekoppelt ist oder ein Bestandteil dieses Körpers selbst ist, stellt eine elektrisch ansteuerbare Bewegungseinrichtung dar. Diese erste Bewegungseinrichtung 6 kann z.B. eine piezoelektrische Biegeplatte, ein piezoelektrischer Linearantrieb, ein elektromechanischer Linearantrieb, ein elektromagnetischer Linearschrittantrieb oder ein magnetostriktiver Linearantrieb sein.

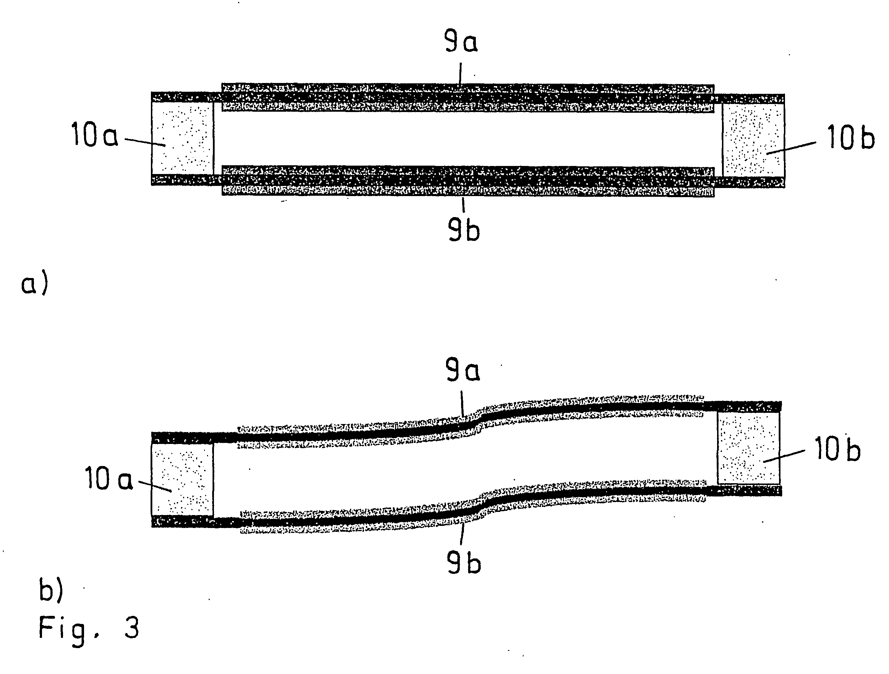

In einer Ausführungsform sind zwei piezoelektrische Biegeplatten als Trimorphpiezoelemente 9a, 9b vorgesehen, die über zwei Abstandskörper 10a, 10b miteinander verbunden sind, wie dies die Detaildarstellung in der Fig. 3a offenbart.

Bei einer solchen Realisierung biegen sich diese Trimorphpiezoelemente 9a, 9b bei der Beaufschlagung mit einer elektrischen Spannung S-förmig (siehe Fig. 3b), so daß planparallele Oberflächen des Körpers 7 als die Ein- und Austrittsflächen der Lichtstrahlen 8 rechtwinklig oder annähernd rechtwinklig zu der Grundfläche des Grundkörpers 1 zumindest im zugeschalteten Zustand angeordnet sind. Bei Nichtansteuerung sind die Trimophpiezoelemente 9a , 9b nicht verformt, so daß weitestgehend eine ebene Anordnung vorhanden ist. Die Fig. 3 zeigt diese Zustände im nicht angesteuerten Zustand a und b dann, wenn eine Ansteuerung vorliegt.

Die Linsen des Linsenarrays 3 sind im optischen Umschalter vorzugsweise so angeordnet, daß symmetrische Linsenkopplungen gegeben sind. Für ein gaußsches Strahlungsbündel, z.B. bei Monomode-Lichtwellenleitern ergeben sich optimale Verhältnisse dann, wenn sich der minimale Durchmesser in Form der Taille der Lichtstrahlen 8 zwischen den Linsen als Eintritt und Austritt für die Lichtstrahlen 8 in der Mitte des Reflektormoduls 5 befindet. Eine Änderung der Wellenlänge oder des Abstands zwischen Eingangsfaser und der zweiten Linse führt zu einer Änderung aller Strahlparameter und damit der Feldverteilung an der jeweiligen Ausgangsfaser 14. Durch die Bildung des Koppelintegrals kann der Anteil der eingekoppelten Leistung berechnet werden.

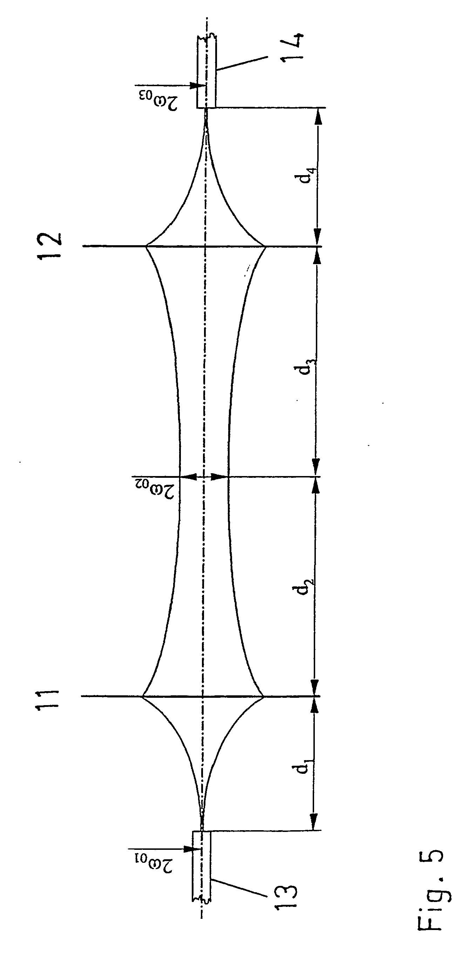

In der Fig. 5 ist eine derartige symmetrische Linsenkopplung mit Strahlengang bei einem gaußschen Strahlenbündel dargestellt, wobei sich das die Eingangsfaser 13 verlassende Licht der Wellenlänge λ mit dem Modenfeldradius ω01 im Abstand d1 von der Linse 11 befindet. Diese transformiert die Strahlung bildseitig in ein Bündel mit dem Taillenradius ω02, das sich im Abstand d2 hinter der Linse 11 befindet. Diese Taille besitzt zur Linse 12, die vor der Ausgangsfaser 14 steht, den Abstand d3. Linse 12 transformiert damit das Bündel mit der Taille ω02 in ein Bündel mit der Taille ω03, das den Abstand d4 von der Linse 12 hat. Das so transformierte Bündel liegt im Idealfall auf der Ausgangsfaser 14 und wird vollständig eingekoppelt. Eine Änderung der Wellenlänge oder des Abstands d1 zwischen Eingangsfaser 13 und Linse 13 führt zu einer Änderung aller anderen Strahlparamemter und letztlich zur Änderung der Taille ω03 und des Abstands d4 und damit der Feldverteilung an der Ausgangsfaser 14. Der Abstand d1 ist in Abhängigkeit von der Wellenlänge λ so einzustellen, daß eine optimale Kopplung erzielt wird, die bei ω01=ω03 und d1=d4 erreicht wird. Dabei existiert ein optimaler Abstand d1, bei dem für einen großen spektralen Bereich von einschließlich 550 nm bis einschließlich 1900 nm Wellenlänge nahezu verlustfrei eingekoppelt wird.

In einer weiteren Ausführungsform gemäß Ausführungsbeispiel sind wenigstens zwei Faserarrays 2 und mindestens zwei Linsenarrays 3 übereinander angeordnet. Der Körper 7 besitzt dabei eine Höhe, so daß wenigstens zwei übereinander verlaufende Lichtstrahlen 8 synchron parallel versetzt werden können. Bei einer Nichtansteuerung der ersten Bewegungseinrichtung 6 werden also die Lichtstrahlen 8 nicht versetzt. Damit ist wenigstens ein 2(1x2)-Umschalter realisierbar.

In einer ergänzenden Ausführungsform ist der Reflektormodul 5 mit einer elektrisch ansteuerbaren zweiten Bewegungseinrichtung verbunden oder diese ist ein Bestandteil des Moduls selbst. Die zweite Bewegungseinrichtung wirkt dabei in Richtung benachbarter Linsen. Die Länge des Weges entspricht mindestens dem halben Abstand zweiter benachbarter Linsen. Diese zweite Bewegungseinrichtung kann gleich der ersten Bewegungseinrichtung 6 ausgeführt sein. Anschläge am Grundkörper 1 können die Bewegung so begrenzen, daß eine Positionsbestimmung nicht notwendig wird.

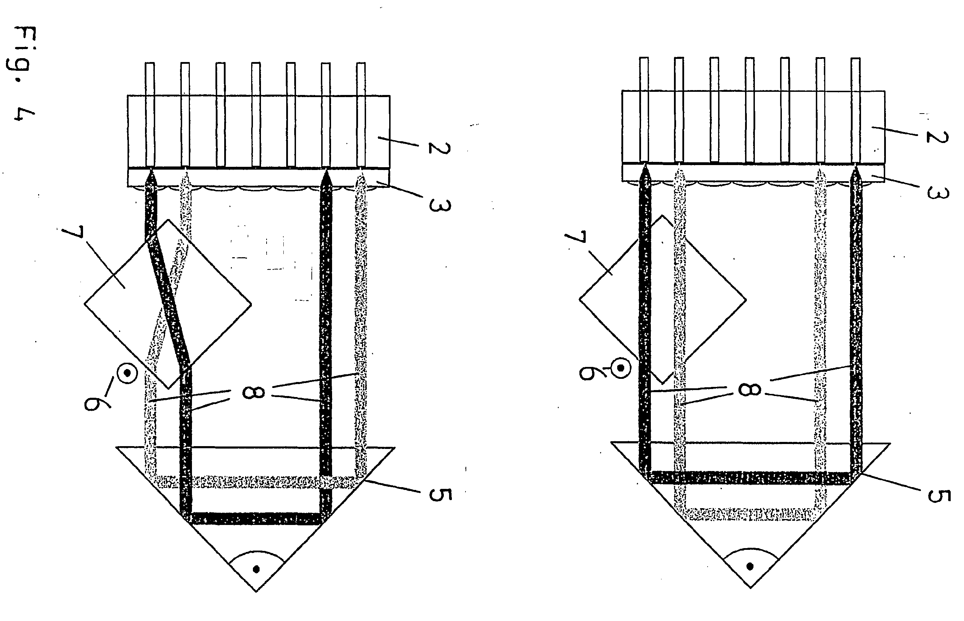

In einer weiteren Ausführungsform des Ausführungsbeispiels weist eine Kante des Quaders als Körper 7 in Richtung des Linsenarrays 3 und befindet sich gleichzeitig zwischen zwei benachbarten Linsen des Linsenarrays 3. Dabei können die Eingänge und die Ausgänge jeweils vertauscht werden. In Fig. 4 ist ein derartiger optischer Umschalter prinzipiell gezeigt. Die Fig. 4a offenbart Lichtstrahlen 8 ohne Versatz und Fig. 4b mit Versatz.

Bei einer Ausführungsform ist die Steuerung für wenigstens die erste Bewegungseinrichtung 6 als Bestandteil des Grundkörpers 1 ausgebildet oder auf diesem Grundkörper 1 angeordnet. Bei einem Silizium-Grundkörper 1 können z.B. durch übliche Halbleitertechnologien elektrische Leiterbahnen und/oder elektrische Schaltelemente auf oder im Grundkörper realisiert bzw. integriert werden.

Ergänzend besteht die Möglichkeit, die Bestandteile des optischen Umschalters mit einer Abdeckung zu versehen, so daß eine kompakte Baugruppe gegeben ist. Vorteilhafterweise kann diese Abdeckplatte als weiterer Anschlag für die erste Bewegungseinrichtung Verwendung finden, so daß diese zwischen zwei Anschlägen in Form des Grundkörpers und der erwähnten Abdeckplatte wirkt.
Mehrere optische Umschalter können winklig zueinander oder übereinander quasi gestapelt, angeordnet sein. Auf diese Weise sind leicht 1 auf n- oder n auf n-Umschalter herstellbar.

## Patentansprüche

1. Optischer Umschalter mit folgenden Merkmalen:
einem Grundkörper (1) oder einer kufenartigen Platte mit einem die Endenbereiche von Lichtwellenleiterfasern aufnehmenden Faserarray (2) als Ein- und/oder Ausgangsbaugruppe,
einem Linsenarray (3), wobei sich jeweils im Strahlengang nach dem Endenbereich einer Faser eine Linse befindet,
einem Ablenkmodul (4), enthaltend mindestens einen den jeweiligen Lichtstrahl so beeinflussenden Körper (7), daß ein paralleler Versatz des mindestens einen Lichtstrahls einstellbar ist, der parallele Versatz dem Abstand der Linsen des Linsen arrays (3) entspricht und der Versatz über eine zweifache Brechung im Körper (7) realisiert wird, wobei der Körper (7) mit einer elektrisch ansteuerbaren ersten Bewegungseinrichtung (6) so verbunden oder gleichzeitig ein Bestandteil dieser ersten Bewegungseinrichtung (6) ist, daß planparallele Oberflächen des Körpers (7) rechtwinklig oder annähernd rechtwinklig zu der Grundfläche des Grundkörpers bewegbar sind,
**gekennzeichnet durch** ein die Lichtstrahlen (8) wenigstens zweimal in einer Ebene und parallel zum Grundkörper (1) reflektierendes Reflektormodul (5), wobei das Faserarray (2), der Ablenkmodul (4) und der Reflektormodul (5) in Strahlungsrichtung nacheinander bzw. hintereinander angeordnet sind.

2. Optischer Umschalter nach Anspruch 1,
**dadurch gekennzeichnet, daß**
das Faserarray (2) ein Bestandteil des Grundkörpers (1) ist.

3. Optischer Umschalter nach Anspruch 1 oder 2,
**dadurch gekennzeichnet, daß**
die Endenbereiche der Fasern in Nuten geführt und weiterhin mit einer Deckplatte fixiert sind.

4. Optischer Umschalter nach Anspruch 1,
**dadurch gekennzeichnet, daß**
der Reflektormodul mit einer elektrisch ansteuerbaren zweiten Bewegungseinrichtung so verbunden oder gleichzeitig ein Bestandteil dieser zweiten Bewegungseinrichtung ist, daß der Reflektormodul (5) in Richtung benachbarter Linsen eine Bewegung ausführt.

5. Optischer Umschalter nach Anspruch 1 und/oder 4,
**dadurch gekennzeichnet, daß**
die erste (6) und/oder die zweite Bewegungseinrichtung mindestens eine piezoelektrische Biegeplatte, ein piezoelektrischer Linearantrieb, ein elektromechanischer Linearantrieb, ein elektromagnetischer Linearschrittantrieb oder ein magnetostriktiver Linearantrieb ist.

6. Optischer Umschalter nach Anspruch 5,
**dadurch gekennzeichnet, daß**
die piezoelektrische Biegeplatte ein Bimorphpiezoelement, Trimorphpiezoelement (9) oder ein Mehrmorphpiezoelement ist.

7. Optischer Umschalter nach Anspruch 1,
**dadurch gekennzeichnet, daß**
der Körper (7) aus einer Ablenkplatte, zwei planparallelen und achromatisierten Ablenkplatten besteht oder eine Quaderform aufweist.

8. Optischer Umschalter nach Anspruch 7,
**dadurch gekennzeichnet, daß**
eine Kante des Quaders in Richtung des Linsenarrays (3) weist und sich zwischen zwei benachbarten Linsen des Linsenarrays (3) befindet.

9. Optischer Umschalter nach Anspruch 1,
**dadurch gekennzeichnet, daß**
der Reflektormodul (5) aus zwei rechtwinklig zueinander angeordneten Reflexionsflächen besteht und daß der Öffnungswinkel in Richtung des Linsenarrays (3) weist.

10. Optischer Umschalter nach Anspruch 1,
**dadurch gekennzeichnet, daß**
der Abstand zwischen dem Ende des Lichtwellenleiters und einer Linse des Linsenarrays (3) so groß ist, daß sich optimale Einkoppelbedingungen für einen großen spektralen Bereich von 550 nm bis 1900 nm ergeben.

11. Optischer Umschalter nach einem der vorangegangenen Ansprüche,
**dadurch gekennzeichnet, daß**
der Grundkörper (1) ein plattenförmiger Körper aus Silizium, Glas, Keramik oder Glaskeramik ist, daß eine Steuerung wenigstens für die erste Bewegungseinrichtung (6) ein Bestandteil des Grundkörpers (6) ist oder auf dem Grundkörper oder der kufenartigen Platte angeordnet ist und daß der wenigstens eine Ausgang der Steuerung mit der mindestens einen Bewegungseinrichtung elektrisch verbunden ist.

12. Optischer Umschalter nach Anspruch 1,
**dadurch gekennzeichnet, daß**
der Körper (7) so ausgestaltet ist, daß dieser in den Strahlengang nebeneinander und/oder übereinander angeordneter Lichtstrahlen (8) bewegbar ist, wobei diese Lichtstrahlen (8) synchron versetzt und damit umgeschaltet werden.

13. Optischer Umschalter nach Anspruch 1,
**dadurch gekennzeichnet, daß**
mehrere optische Umschalter winklig zueinander oder übereinander angeordnet sind.

## Claims

1. Optical commutator with the following features:
a basic body (1) or a skidlike plate with a fibre array (2) incorporating the end areas of optical waveguide fibres as an input and/or output subassembly,
a lens array (3), wherein a lens is located in each case in the beam path after the end area of a fibre,
a deflection module (4), containing at least one body (7) influencing the particular light beam in such a way that parallel offset of the at least one light beam is adjustable, the parallel offset corresponds to the spacing of the lenses of the lens array (3) and the offset is realised via twofold refraction in the body (7), wherein the body (7) is connected to a first electrically controllable movement device (6), or is simultaneously an integral part of this first movement device (6), in such a way that plane-parallel surfaces of the body (7) can be moved at right angles or approximately at right angles to the area of the basic body,
**characterised by**
a reflector module (5) reflecting the light beams (8) at least twice in a plane and parallel to the basic body (1), wherein the fibre array (2), the deflection module (4) and the reflector module (5) are arranged after or behind each other in the direction of radiation.

2. Optical commutator according to Claim 1,
**characterised in that**
the fibre array (2) is an integral part of the basic body (1).

3. Optical commutator according to Claim 1 or 2,
**characterised in that**
the end areas of the fibres are guided in grooves and further fixed with a cover plate.

4. Optical commutator according to Claim 1,
**characterised in that**
the reflector module is connected to a second electrically controllable movement device, or is simultaneously an integral part of this second movement device, in such a way that the reflector module (5) executes a movement in the direction of adjacent lenses.

5. Optical commutator according to Claim 1 and/or 4,
**characterised in that**
the first (6) and/or second movement device is at least one piezoelectric bending plate, a piezoelectric linear drive, an electromechanical linear drive, an electromagnetic linear step drive or a magnetostrictive linear drive.

6. Optical commutator according to Claim 5,
**characterised in that**
the piezoelectric bending plate is a bimorphic piezo element, trimorphic piezo element (9) or a multimorphic piezo element.

7. Optical commutator according to Claim 1,
**characterised in that**
the body (7) consists of a deflection plate, two plane-parallel and achromatised deflection plates or is cuboid in shape.

8. Optical commutator according to Claim 7,
**characterised in that**
one edge of the cuboid points in the direction of the lens array (3) and is located between two adjacent lenses of the lens array (3).

9. Optical commutator according to Claim 1,
**characterised in that**
the reflector module (5) consists of two reflection surfaces arranged at right angles to each other and that the angle of beam points in the direction of the lens array (3).

10. Optical commutator according to Claim 1,
**characterised in that**
the distance between the end of the optical waveguide and one lens of the lens array (3) is so large that optimum launch conditions result for a large spectral range of 550 nm to 1900 nm.

11. Optical commutator according to one of the previous claims,
**characterised in that**
the basic body (1) is a plate-shaped body made of silicon, glass, ceramic or glass ceramic, that a steering mechanism is an integral part of the basic body (1) at least for the first movement device (6) or is arranged on the basic body or the skidlike plate, and that the at least one output of the steering mechanism is electrically connected to the at least one movement device.

12. Optical commutator according to Claim 1,
**characterised in that**
the body (7) is embodied in such a way that this can be moved in the light beams (8) arranged next to and/or above each other in the beam path, wherein these light beams (8) are synchronously offset and thus commutated.

13. Optical commutator according to Claim 1,
**characterised in that**
several optical commutators are arranged at angles to each other or above each other.

## Revendications

1. Commutateur optique présentant les caractéristiques suivantes :
un corps de base (1) ou une plaque en forme de patin avec un réseau de fibres (2) où sont logées les zones d'extrémité des fibres d'un guide d'ondes lumineuses en tant que groupe de composants d'entrée et/ou de sortie,
un réseau de lentilles (3), chaque lentille étant disposée sur le trajet du faisceau suivant la zone d'extrémité d'une fibre,
un module de déviation (4) comprenant au moins un corps (7) influençant chaque faisceau lumineux de manière à pouvoir régler un décalage parallèle du ou des faisceaux lumineux, ledit décalage parallèle correspondant à l'intervalle inter-lenticulaire du réseau de lentilles (3), et le décalage étant produit par une double réfraction à l'intérieur du corps (7), le corps (7) étant relié à un premier dispositif de déplacement (6) à commande électrique, ou étant simultanément un composant du dit premier dispositif de déplacement (6), de telle manière que des surfaces parallèles du corps (7) puissent être déplacées perpendiculairement ou sensiblement perpendiculairement à la surface de base du corps de base,
**caractérisé par** un module de réflecteur (5) réfléchissant les faisceaux lumineux (8) au moins deux fois dans un plan et parallèlement au corps de base (1), le réseau de fibres (2), le module de déviation (4) et le module de réflecteur (5) étant disposés successivement ou l'un derrière l'autre dans le sens de rayonnement.

2. Commutateur optique selon la revendication 1,
**caractérisé en ce que**
le réseau de fibres (2) est un composant du corps de base (1).

3. Commutateur optique selon la revendication 1 ou la revendication 2,
**caractérisé en ce que**
les zones d'extrémité des fibres sont insérées dans des rainures et fixées en outre par une plaque de couverture.

4. Commutateur optique selon la revendication 1,
**caractérisé en ce que**
le module de réflecteur est relié à un deuxième dispositif de déplacement à commande électrique, ou est simultanément un composant du dit deuxième dispositif de déplacement, de telle manière que le module de réflecteur (5) exécute un déplacement vers les lentilles contiguës.

5. Commutateur optique selon la revendication 1 et/ou la revendication 4,
**caractérisé en ce que**
le premier (6) et/ou le deuxième dispositif de déplacement sont au moins une plaque de flexion piézoélectrique, un entraînement linéaire piézoélectrique, un entraînement linéaire électromécanique, un entraînement linéaire pas à pas électromagnétique ou un entraînement linéaire magnétostrictif.

6. Commutateur optique selon la revendication 5,
**caractérisé en ce que**
la plaque de flexion piézoélectrique est un piézoélément bimorphe, un piézoélément trimorphe (9) ou un piézoélément polymorphe.

7. Commutateur optique selon la revendication 1,
**caractérisé en ce que**
le corps (7) se compose d'une plaque de déviation, de deux plaques de déviation parallèles et achromatisées, ou présente une forme parallélépipédique.

8. Commutateur optique selon la revendication 7,
**caractérisé en ce qu'**
un bord du parallélépipède est dirigé vers le réseau de lentilles (3) et est disposé entre deux lentilles contiguës du réseau de lentilles (3).

9. Commutateur optique selon la revendication 1,
**caractérisé en ce que**
le module de réflecteur (5) se compose de deux surfaces de réflexion disposées perpendiculairement l'une à l'autre, et **en ce que** l'angle d'ouverture est dirigé vers le réseau de lentilles (3).

10. Commutateur optique selon la revendication '1,
**caractérisé en ce que**
l'intervalle entre l'extrémité du guide d'ondes lumineuses et une lentille du réseau de lentilles (3) est d'une grandeur telle qu'il en résulte des conditions optimales de couplage pour une plage spectrale étendue, comprise entre 550 nm et 1900 nm.

11. Commutateur optique selon l'une des revendications précédentes,
**caractérisé en ce que**
le corps de base (1) est un corps en forme de plaque en silicium, verre, céramique ou vitrocéramique, **en ce qu'**une commande pour le premier dispositif de déplacement (6) au moins est un composant du corps de base (1) ou est disposée sur le corps de base ou la plaque en forme de patin, et **en ce que** la ou les sorties de la commande sont électriquement raccordées à un dispositif de déplacement au moins.

12. Commutateur optique selon la revendication 1,
**caractérisé en ce que**
le corps (7) est réalisé de manière à pouvoir être déplacé sur le trajet de faisceaux lumineux (8) disposés côte à côte et/ou superposés l'un à l'autre, lesdits faisceaux lumineux (8) étant décalés de manière synchrone et ainsi commutés.

13. Commutateur optique selon la revendication 1,
**caractérisé en ce que**
plusieurs commutateurs optiques sont disposés angulairement l'un par rapport à l'autre ou superposés.
